# FASCICULE DE BREVET EUROPEEN

(11) **EP 1 930 565 B1**
(45) Date de publication et mention de la délivrance du brevet: **22.07.2015**
(21) Numéro de dépôt: 07291346.0
(22) Date de dépôt: 09.11.2007
(51) Int. Cl.: F02B 25/22, F02M 69/04, F02D 13/02

(54) **Moteur suralimenté à combustion interne et à balayage des gaz brûlés avec au moins deux moyens d'admission**
Aufgeladener Verbrennungsmotor mit Spülung der verbrannten Gase und mindestens zwei Zuleitungwegen
Supercharged internal combustion engine with scavenging of the burnt gas and at least two intakes

(30) Priorité: 30.11.2006 FR 0610550
(43) Date de publication de la demande: 11.06.2008
(73) Titulaire: IFP Energies nouvelles, 92852 Rueil-Malmaison Cedex (FR)
(72) Inventeur: Pagot, Alexandre, 92500 Rueil Malmaison (FR)

(56) Documents cités:
- EP-A- 1 726 805
- DE-A1- 19 535 047
- FR-A1- 2 720 113
- FR-A1- 2 720 114
- JP-A- 59 043 922

## Description

La présente invention se rapporte à un moteur suralimenté à combustion interne et à balayage des gaz brûlés avec au moins deux moyens d'admission.

Elle concerne plus particulièrement un moteur de type à injection indirecte de carburant et en particulier à allumage commandé.

Dans ce type de moteur, la puissance délivrée par un moteur à combustion interne est fonction de la quantité d'air introduite dans sa chambre de combustion. Pour cette raison, il est prévu d'augmenter cette quantité d'air au moyen d'une compression de l'air avant qu'il ne soit admis dans cette chambre de combustion pour répondre à la demande de puissance. Cette suralimentation en air peut être réalisée par tous moyens, tels qu'un turbocompresseur ou un compresseur entraîné, comme un compresseur à vis.

Comme cela est déjà connu, une opération de balayage des gaz brûlés résiduels dans la chambre de combustion permet d'augmenter encore plus cette quantité d'air admise dans le cylindre en évacuant ces gaz, durant la phase d'admission du moteur, pour les remplacer par de l'air suralimenté.

Comme cela est mieux détaillé dans le document FR-A-2 886 342 (EP 1 726 805), la phase de balayage consiste à réaliser, en fin de cycle d'échappement du moteur et en début de cycle d'admission, un croisement entre les soupapes d'échappement et d'admission d'un même cylindre. Ce croisement est réalisé en ouvrant simultanément ces soupapes d'échappement et d'admission pendant quelques degrés à quelques dizaines de degrés d'angle de rotation de vilebrequin.

Dans l'exemple du moteur suralimenté à injection indirecte de carburant décrit dans ce document, il est prévu au moins un moyen d'échappement des gaz brûlés avec une soupape d'échappement ainsi qu'une tubulure d'échappement et au moins deux moyens d'admission d'air suralimenté constitué chacun d'une tubulure, portant un injecteur de carburant, et d'une soupape.

Le balayage des gaz brûlés est réalisé, d'une part, grâce au croisement de la soupape d'échappement et de l'une des soupapes d'admission d'air suralimenté alors que l'autre des soupapes d'admission d'air suralimenté reste fermée et, d'autre part, par le fait que la pression de l'air au niveau de la soupape d'admission ouverte est plus élevée que la pression des gaz d'échappement encore présents dans la chambre de combustion.

L'air suralimenté alors admis dans la chambre de combustion est un air suralimenté non carburé par le fait que l'injecteur de carburant n'est pas actionné. Cet air non carburé balaye les gaz d'échappement présents dans cette chambre pour les évacuer au travers de la soupape d'échappement. De ce fait, de l'air suralimenté non carburé occupe le volume libéré par ces gaz d'échappement, ce qui permet une augmentation non négligeable de la quantité d'air introduite dans la chambre pendant le cycle d'admission du moteur. Au voisinage de la fin de la phase de balayage, la soupape d'échappement se ferme, l'autre soupape d'admission d'air suralimenté s'ouvre, l'injecteur de carburant qui est associé à cette soupape est activé et de l'air suralimenté carburé est admis dans la chambre de combustion par l'autre moyen d'admission en complément de l'air suralimenté non carburé qui y est admis.

Lors du mode de fonctionnement conventionnel du moteur en dehors de la phase de balayage, les deux soupapes d'admission s'ouvrent, les deux injecteurs sont actionnés et de l'air suralimenté carburé est introduit dans la chambre de combustion simultanément par les deux tubulures d'admission.

Ce type de moteurs, bien que donnant satisfaction, présente l'inconvénient non négligeable de nécessiter la présence de deux injecteurs de carburant par cylindre. Outre le coût non négligeable de ces injecteurs, il est indispensable de doubler non seulement l'arrivée de carburant mais aussi de prévoir un doublement des connectiques des injecteurs pour chaque cylindre et des moyens de commandes associés à ces injecteurs. Ceci augmente d'autant plus les risques de pannes et de dysfonctionnement.

Il est également connu, par les documents DE 195 35 047 et FR 2 720 114, un moteur à combustion interne qui utilise un injecteur de carburant à deux jets pour alimenter, soit les deux moyens d'admission du moteur, soit un seul de ces moyens.

Cette disposition présente l'inconvénient de ne pas pouvoir être utilisée pendant une phase d'admission du moteur avec balayage de gaz brûlés où aucun carburant ne doit être introduit dans les cylindres du moteur.

La présente invention se propose de remédier aux inconvénients ci-dessus mentionnés grâce à un moteur avec des moyens d'admission simples et peu coûteux.

A cet effet, la présente invention concerne un moteur à combustion interne à injection indirecte, notamment moteur suralimenté, en particulier à allumage commandé, pouvant fonctionner en mode de balayage de gaz brûlés ou en mode conventionnel, et comprenant au moins un cylindre avec une chambre de combustion, au moins deux moyens d'admission d'air, l'un des moyens étant un moyen d'admission de balayage de gaz brûlés et l'autre des moyens étant un moyen d'admission d'injection de carburant, lesdits moyens comportant chacun une tubulure contrôlée par une soupape d'admission, au moins un moyen d'échappement de gaz brûlés avec une soupape d'échappement associée à une tubulure d'échappement et au moins un moyen d'injection de carburant, caractérisé en ce que le moyen d'injection de carburant comprend un injecteur de carburant à deux nez contrôlés chacun par une aiguille dont le déplacement est commandé par un moyen de commutation, qui permet de faire varier le temps d'injection de l'un des nez par rapport à l'autre des nez, ledit injecteur étant placé sur les tubulures d'admission d'une manière telle qu'il permette d'introduire du carburant dans ces tubulures en permettant, en mode de fonctionnement du moteur avec balayage avec croisement des soupapes d'admission et d'échappement, de ne pas alimenter en carburant aucun des deux moyens d'admission de façon à ce que de l'air soit introduit par le moyen d'admission de balayage de gaz brûlés au début de ce mode de fonctionnement, puis d'alimenter en carburant uniquement le moyen d'admission d'injection par l'un des nez après la fermeture de la soupape d'échappement tout en maintenant l'introduction de l'air par le moyen d'admission de balayage de gaz brûlés et, pour le fonctionnement conventionnel du moteur, d'alimenter en carburant par les deux nez respectivement les moyens d'admission de balayage et d'injection.

De manière préférentielle, le moteur à combustion interne comprend un calculateur contrôlant les paramètres d'injection de l'injecteur tel que le temps d'injection.

Les autres caractéristiques et avantages de l'invention apparaîtront mieux à la lecture de la description qui va suivre, donnée à titre uniquement illustratif et nullement limitatif, en se référant aux figures annexées sur lesquelles :
- la figure 1 est une vue schématique d'un moteur à combustion interne selon l'invention et
- la figure 2 est une vue schématique de détail d'un élément du moteur selon la figure 1.

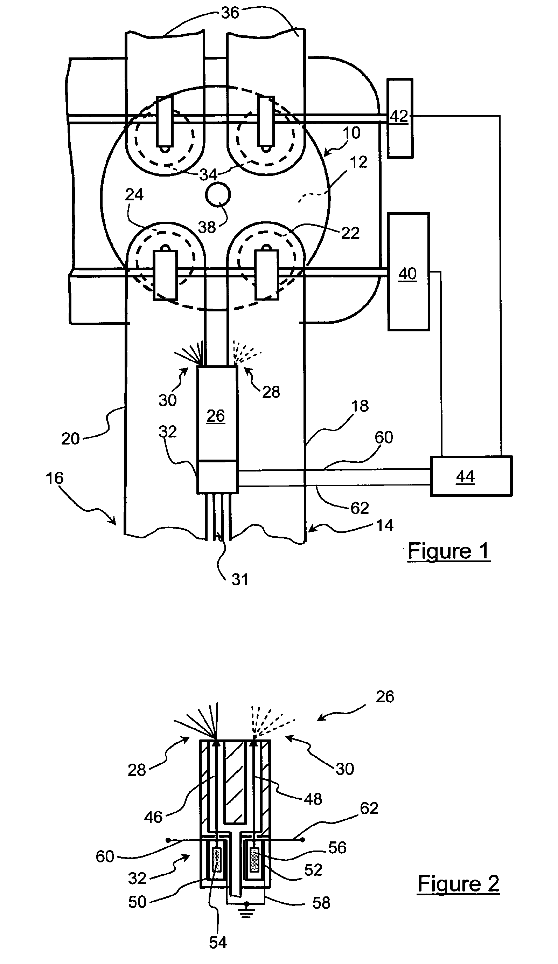

La figure 1 montre un moteur à combustion interne suralimenté, notamment de type à injection indirecte de carburant (essence, GPL, GNV,...) et en particulier à allumage commandé.

Ce moteur comprend au moins un cylindre 10 avec un piston (non représenté) et une chambre de combustion 12 dans laquelle se produit la combustion d'un mélange carburé, comme un mélange d'air suralimenté et de carburant ou d'air suralimenté additionné de gaz d'échappement recirculés (EGR) et de carburant.

Le cylindre 10 comprend au moins deux moyens d'admission d'air 14, 16, qui, lors de la phase de balayage des gaz brûlés, sont utilisés, pour l'un 14, comme moyens d'admission de balayage et, pour l'autre 16, en tant que moyens d'admission d'injection. Les moyens d'admission de balayage 14 permettent d'introduire dans la chambre de combustion un air suralimenté non carburé pour la phase de balayage ou un air suralimenté carburé pour le fonctionnement conventionnel du moteur. Les moyens d'admission d'injection 16 autorisent l'introduction dans cette chambre d'un air suralimenté carburé aussi bien lorsque le moteur fonctionne avec une phase de balayage des gaz brûlés qu'avec un fonctionnement conventionnel de ce moteur.

Généralement, ces moyens d'admission sont constitués par un orifice prévu dans la culasse que comporte généralement ce moteur et qui débouche dans la chambre de combustion 12, une tubulure 18, 20 en communication avec cet orifice et une soupape d'admission 22, 24 apte à obturer l'orifice. De manière préférentielle, les deux tubulures sont conformées de manière à être sensiblement parallèles l'une à l'autre en étant connectées à un moyen d'alimentation en air, tel qu'un collecteur d'admission (non représenté).

Un injecteur de carburant 26 à double nez 28, 30 (ou à double jets) est placé sur les tubulures 18 et 20 d'une manière telle qu'il permet d'introduire un jet de carburant dans ces tubulures en fonction du mode de fonctionnement du moteur. Cet injecteur est alimenté par une seule conduite d'arrivée de carburant 31 dont la répartition du carburant entre les nez est assurée par un moyen de commutation 32.

Le cylindre 10 porte également au moins un moyen d'échappement de gaz brûlés, ici deux moyens d'échappement, comportant chacun une soupape d'échappement 34 et une tubulure d'échappement 36.

Le moteur peut comprendre aussi une bougie 38 permettant d'initier la combustion du mélange carburé contenu dans la chambre de combustion 12.

Les soupapes d'admission de balayage 22 et d'injection 24 ainsi que les soupapes d'échappement 34 sont commandées par des moyens 40 et 42 permettant de faire varier les lois de levées de ces soupapes, tant au niveau de leurs moments d'ouverture/fermeture qu'au niveau de leurs levées, et cela indépendamment les unes des autres ou de manière associée. Ces moyens sont plus connus sous le sigle de VVT (Variable Valve Timing) ou VVL (Variable Valve Lift) ou VVA (Variable Valve Actuation).

Les moyens de commande 40 et 42 sont contrôlés par le calculateur-moteur 44 que comporte habituellement un moteur et qui comprend des cartographies ou des tables qui permettent de modifier, en fonction des conditions de fonctionnement du moteur, les lois de levée de soupapes et qui commande également les paramètres d'injection de l'injecteur 26, comme l'alimentation sélective en carburant des nez, le temps d'injection, etc.

En se rapportant maintenant à la figure 2, l'injecteur 26 comprend deux nez 28, 30 contrôlés chacun par une aiguille 46, 48 dont le déplacement est commandé par le moyen de commutation 32. Avantageusement, ce moyen de commutation comprend pour chaque aiguille une bobine électromagnétique 50, 52 avec un plongeur 54, 56 lié respectivement aux aiguilles 46, 48. Les bobines 50, 52 sont reliées entre elles par un conducteur électrique 58 relié à la masse et chaque bobine comporte un fil conducteur 60, 62 relié au calculateur-moteur 44.

Grâce à cela, il est possible non seulement de contrôler les nez indépendamment l'un de l'autre mais aussi de faire varier les paramètres d'injections de l'un des nez par rapport à l'autre des nez.

Lors du fonctionnement du moteur selon un mode d'admission en air suralimenté avec balayage des gaz brûlés, le calculateur-moteur 44 déclenche une phase de balayage des gaz brûlés. Pour cela, ce calculateur-moteur commande les moyens de commande 40 et 42 pour réaliser un croisement des soupapes. Dans cette étape, le piston étant au voisinage du point mort haut, les soupapes d'échappement 34 sont ouvertes, la soupape d'admission 24 du moyen d'admission d'injection 16 est en position de fermeture, la soupape d'admission 22 du moyen d'admission de balayage 14 est en position d'ouverture et l'injecteur 26 n'est pas opérationnel, c'est-à-dire que les nez 38 et 40 sont obstrués par les aiguilles 46, 48.

Sous l'effet du différentiel de pression entre la pression de l'air suralimenté non carburé au niveau de la soupape 22 et cette des gaz brûlés résiduels présents dans la chambre 12, ceux-ci sont évacués au travers des soupapes d'échappement 34 vers les tubulures d'échappement 36 et sont remplacés par de l'air suralimenté dépourvu de carburant.

Dès que la phase de balayage des gaz brûlés est terminée, les soupapes d'échappement 34 sont commandées en position de fermeture sous l'effet du moyen de commande 42, la soupape d'admission de balayage 22 reste ouverte et la soupape d'admission d'injection 24 s'ouvre sous l'action du moyen de commande 40. Le calculateur-moteur commande alors la bobine 50 par le fil 60 de façon à déplacer le plongeur 54 sous l'effet du champ électromagnétique généré par cette bobine, ce qui libère le nez 28 en injectant du carburant uniquement dans la tubulure 20. De ce fait, un mélange carburé est introduit dans la chambre de combustion 12.

En cas de fonctionnement conventionnel du moteur avec un mode d'admission sans balayage de gaz brûlés, les soupapes d'admission 22, 24 et les soupapes d'échappement 34 sont commandées de façon classique. Ainsi, au voisinage du point mort haut du piston, les soupapes d'échappement 34 sont en position de fermeture et la soupape d'admission de balayage 22 ainsi que la soupape d'admission d'injection 24 s'ouvrent. Le calculateur-moteur active l'injecteur de façon à ce que les deux bobines 50 et 52 soient alimentées par les fils 60 et 62 en déplaçant les aiguilles 46 et 48 pour permettre l'approvisionnement en carburant par les deux nez 28 et 30 en injectant du carburant respectivement dans les tubulures 18 et 20. Ceci permet ainsi d'introduire un mélange carburé dans la chambre de combustion par chacune des tubulures.

Grâce à l'invention, un seul injecteur permet d'injecter du carburant soit dans la tubulure d'admission d'injection soit dans les deux tubulures d'admission et cela de manière simple, fiable et économique.

La présente invention n'est pas limitée à l'exemple décrit mais englobe toutes variantes et tous équivalents.

## Revendications

1. Moteur à combustion interne à injection indirecte, notamment moteur suralimenté, en particulier à allumage commandé, pouvant fonctionner en mode de balayage de gaz brûlés ou en mode conventionnel, et comprenant au moins un cylindre (10) avec une chambre de combustion (12), au moins deux moyens d'admission d'air (14, 16), l'un (14) des moyens étant un moyen d'admission de balayage de gaz brûlés comportant une tubulure (18) contrôlée par une soupape d'admission de balayage (22) et l'autre (16) des moyens étant un moyen d'admission d'injection de carburant comportant une tubulure (20) contrôlée par une soupape d'admission d'injection (24), au moins un moyen d'échappement de gaz brûlés avec une soupape d'échappement (34) associée à une tubulure d'échappement (36) et au moins un moyen d'injection de carburant (26), **caractérisé en ce que** le moyen d'injection de carburant comprend un injecteur (26) de carburant à deux nez (28, 30) contrôlés chacun par une aiguille (46, 48) dont le déplacement est commandé par un moyen de commutation (32), qui permet de varier le temps d'injection de l'un des nez par rapport à l'autre des nez, ledit injecteur étant placé sur les tubulures d'admission d'une manière telle qu'il permette d'introduire du carburant dans ces tubulures en permettant, en mode de fonctionnement du moteur avec balayage avec le croisement de la soupape d'admission de balayage (22) et de la soupape d'échappement (34), de ne pas alimenter en carburant aucun des deux moyens d'admission de façon à ce que de l'air soit introduit dans la chambre de combustion par le moyen d'admission de balayage (14) au début de ce mode de fonctionnement, puis d'alimenter en carburant uniquement le moyen d'admission d'injection (16) par l'un (30) des nez, après la fermeture de la soupape d'échappement et ouverture de la soupape d'admission d'injection, en introduisant un mélange d'air carburé dans la chambre tout en maintenant l'introduction de l'air dans cette chambre par le moyen d'admission de balayage de gaz brûlés (14) et, pour le fonctionnement conventionnel du moteur, d'alimenter en carburant par les deux nez (28, 30) respectivement les moyens d'admission de balayage (14) et d'injection (16) pour introduire une mélange carburé dans le chambre de combustion par lesdits moyens d'admission.

2. Moteur à combustion interne selon la revendication 1, **caractérisé en ce qu'**il comprend un calculateur (44) contrôlant des paramètres d'injection de l'injecteur (26) tel que le temps d'injection.

## Patentansprüche

1. Brennkraftmaschine mit indirekter Einspritzung, insbesondere aufgeladener Motor, insbesondere mit gesteuerter Zündung, der im Spülmodus der verbrannten Gase oder im herkömmlichen Modus funktionieren kann und mindestens einen Zylinder (10) mit einer Brennkammer (12), mindestens zwei Luftansaugmittel (14, 16) umfasst, wobei das eine (14) der Mittel ein Ansaugmittel zum Spülen verbrannter Gase ist, das einen Rohrstutzen (18) umfasst, der von einem Spülansaugventil (22) gesteuert ist, und das andere (16) der Mittel ein Ansaugmittel zur Kraftstoffeinspritzung ist, das einen Rohrstutzen (20) umfasst, der von einem Einspritzansaugventil (24) gesteuert ist, mindestens ein Auslassmittel verbrannter Gase mit einem Auslassventil (34), das mit einem Auslassrohrstutzen (36) assoziiert ist, und mindestens ein Kraftstoffeinspritzmittel (26), **dadurch gekennzeichnet, dass** das Kraftstoffeinspritzmittel eine Kraftstoffeinspritzdüse (26) mit zwei Düsen (28, 30) umfasst, die jeweils durch eine Nadel (46, 48) gesteuert sind, deren Bewegung von einem Umschaltmittel (32) gesteuert ist, das es erlaubt, die Einspritzzeit einer der Düsen in Bezug auf die andere der Düsen zu variieren, wobei die Einspritzdüse auf den Ansaugrohrstutzen derart platziert ist, dass sie es erlaubt, Kraftstoff in diese Rohrstutzen einzuführen, indem im Betriebsmodus des Motors mit Spülen mit dem Kreuzen des Spülansaugventils (22) und des Auslassventils (34) keines der zwei Ansaugmittel mit Kraftstoff versorgt wird, so dass Luft in die Brennkammer durch das Spülansaugmittel (14) zu Beginn dieses Betriebsmodus eingeführt wird, dann nur das Einspritzansaugmittel (16) durch eine (30) der Düsen mit Kraftstoff nach dem Schließen des Auslassventils und Öffnen des Einspritzansaugventils versorgt wird, indem ein Luft-Kraftstoffgemisch in die Kammer eingeführt wird, während gleichzeitig die Einführung von Luft in diese Kammer durch das Spülansaugmittel von verbrannten Gasen (14) aufrechterhalten wird, und, für den herkömmlichen Betrieb des Motors durch die zwei Düsen (28, 30) jeweils die Spülansaugmittel (14) und Einspritzmittel (16) mit Kraftstoff zu versorgen, um ein Luft-Kraftstoffgemisch in die Brennkammer durch die Ansaugmittel einzuführen.

2. Brennkraftmaschine nach Anspruch 1, **dadurch gekennzeichnet, dass** sie einen Rechner (44) umfasst, der Einspritzparameter der Einspritzdüse (26), wie zum Beispiel die Einspritzdauer steuert.

## Claims

1. An indirect-injection internal-combustion engine, notably a supercharged engine, in particular of spark-ignition type, which can run in burnt gas scavenging mode or conventional mode, comprising at least one cylinder (10) with a combustion chamber (12), at least two air intake means (14, 16), one (14) of the means being a burnt gas scavenging intake means comprising a pipe (18) controlled by a scavenging intake valve (22) and the other (16) being a fuel injection intake means comprising a pipe (20) controlled by an injection intake valve (24), at least one burnt gas exhaust means with an exhaust valve (34) associated with an exhaust pipe (36) and at least one fuel injection means (26), **characterized in that** the fuel injection means comprises a fuel injector (26) with two nozzles (28, 30) controlled each by a needle (46, 48) whose displacement is driven by a switch means (32), which allows the injection time of one of the nozzles to be varied in relation to the other nozzle, said injector being arranged on the intake pipes in such a way that it allows fuel to be fed to these pipes by allowing, when the engine runs in scavenging mode with overlap of scavenging intake valve (22) and exhaust valve (34), not to feed fuel to any of the two intake means so that air is fed to the combustion chamber through scavenging intake means (14) at the beginning of this running mode, then to feed fuel only to injection intake means (16) through one (30) of the nozzles, after the exhaust valve has closed and the injection intake valve has opened, by supplying a fuel mixture to the chamber while maintaining air supply to this chamber through burnt gas scavenging intake means (14) and, when the engine runs in conventional mode, to feed fuel through both nozzles (28, 30) to the scavenging (14) and injection (16) intake means respectively so as to feed a fuel mixture to the combustion chamber through said intake means.

2. An internal-combustion engine as claimed in claim 1, **characterized in that** it comprises a calculator (44) controlling injection parameters of injector (26) such as the injection time.
